# EUROPÄISCHE PATENTSCHRIFT

(11) **EP 3 509 931 B1**
(45) Veröffentlichungstag und Bekanntmachung des Hinweises auf die Patenterteilung: **01.07.2020**
(21) Anmeldenummer: 17751318.1
(22) Anmeldetag: 27.07.2017
(51) Int. Cl.: B62D 15/02, G08G 1/16, B60W 30/06, B60W 30/095

(54) **VERFAHREN ZUM BETREIBEN EINES FAHRZEUGS UND STEUERGERÄT ZUR DURCHFÜHRUNG DES VERFAHRENS**
METHOD FOR OPERATING A VEHICLE, AND CONTROL UNIT FOR CARRYING OUT THE METHOD
PROCÉDÉ PERMETTANT DE FAIRE FONCTIONNER UN VÉHICULE ET APPAREIL DE COMMANDE SERVANT À METTRE EN UVRE LE PROCÉDÉ

(30) Priorität: 12.09.2016 DE 102016217330
(43) Veröffentlichungstag der Anmeldung: 17.07.2019
(73) Patentinhaber: Volkswagen Aktiengesellschaft, 38440 Wolfsburg (DE)
(72) Erfinder: MAX, Stephan, 38518 Gifhorn (DE); WEISS, Kristian, 13187 Berlin (DE); BAUER, Sascha, 12103 Berlin (DE); KIRLANGIC, Mehmet Eylem, 38440 Wolfsburg (DE); WEGE, Andreas, 10557 Berlin (DE); KONNOPKA, Robert, 13129 Berlin (DE); KRÜGER, Lars, 16244 Schorfheide (DE); KLANDT, Jesko, 13088 Berlin (DE); TENDYCK, Christian, 10629 Berlin (DE)
(86) Internationale Anmeldenummer: PCT/EP2017/069063
(87) Internationale Veröffentlichungsnummer: WO 2018/046177

(56) Entgegenhaltungen:
- DE-A1-102008 002 598
- DE-A1-102011 107 974
- DE-A1-102013 015 349
- DE-A1-102014 216 577
- US-A1- 2013 085 637

## Beschreibung

Die Erfindung betrifft ein Verfahren zum Betreiben eines Fahrzeugs, insbesondere eines Kraftfahrzeugs, und ein Steuergerät zur Durchführung des Verfahrens. Des Weiteren betrifft die vorliegende Erfindung ein Fahrzeug mit dem Steuergerät. Das Verfahren zum Betreiben des Fahrzeugs dient zum Anfahren eines Stellplatzes durch das Fahrzeug.

Seit mehreren Jahren sind halbautomatische und vollautomatische Einparksysteme bekannt. Halbautomatische Einparksysteme führen bei einem halbautomatischen Einparkvorgang die Lenkbewegung (Quersteuerung) des Fahrzeugs durch, während der Fahrer weiterhin für die Längssteuerung des Fahrzeugs verantwortlich ist, also für das Einlegen der richtigen Fahrstufe sowie die Betätigung von Gaspedal und Bremse. Bei einem vollautomatischen Einparksystem übernimmt dieses bei einem vollautomatischen Einparkvorgang sowohl die Quer- als auch die Längssteuerung.

Auch sind Einparksysteme bekannt, bei denen in einem Lernmodus eingelernt wird, wo sich ein bestimmter Stellplatz (Parkplatz) befindet, etwa die heimische Garage, ein heimischer Parkplatz, ein Parkplatz am Arbeitsplatz, etc. Im Anschluss an den Lernvorgang ist das Fahrzeug in der Lage, die Position des Fahrzeugs in der Nähe des angelernten Parkplatzes zu erkennen und von dort selbstständig (automatisch) bis zum angelernten Parkplatz zu fahren. Derartige Einparksysteme sind auch unter den Begriffen "automatisches Garagenparken" oder "Homezone-Parking" bekannt.

Bezüglich der letztgenannten Einparksysteme sind aus dem Stand der Technik Erweiterungen und Modifikationen bekannt.

So beschreibt etwa die DE 10 2013 015 349 A1, die den Oberbegriff des Anspruchs 1 offenbart, ein Verfahren zum Betrieb eines Fahrzeugs, insbesondere zum Anfahren eines Parkplatzes in einer nicht einsehbaren/straßenfernen Parkzone durch das Fahrzeug, bei welchem Umgebungsdaten des Fahrzeugs erfasst werden, wobei beim Anfahren eines Parkplatzes in der Parkzone identifiziert wird, ob dieser ein Heim-Parkplatz oder die Parkzone eine Heim-Parkzone ist, wobei bei identifiziertem Heim-Parkplatz oder Heim-Parkzone und Annäherung des Fahrzeugs an den identifizierten Heim-Parkplatz bzw. an die identifizierte Heim-Parkzone erfasste Umgebungsdaten oder Fahrdaten gespeichert oder aktualisiert werden.

Aus der DE 10 2014 216 577 A1 ist ein Verfahren zum Unterstützen eines Fahrers eines Fahrzeugs bekannt, umfassend eine Lernphase, in der nach Aktivierung der Lernphase durch den Fahrer ein Fahrmanöver ausgeführt wird, bei dem das Fahrzeug von einer Startposition in eine Zielposition verbracht wird, wobei Informationen über die Startposition, sowie Informationen über das durchgeführte Fahrmanöver gespeichert werden, außerdem umfassend eine Ausführungsphase, wobei dem Fahrer die Möglichkeit zur Aktivierung einer Unterstützungsfunktion angeboten wird, wenn sich das Fahrzeug in einem Bereich der Startposition befindet, nach Aktivierung der Unterstützungsfunktion ein unterstütztes Fahrmanöver basierend auf den gespeicherten Informationen durchgeführt wird, wobei das Fahrmanöver in Form von Richtungsanweisungen gespeichert wird, und nach Aktivierung der Unterstützungsfunktion sich das Fahrzeug gemäß den gespeicherten Richtungsanweisungen von seiner aktuellen Position in Richtung der Zielposition bewegt, wobei die Umgebung des Fahrzeugs, insbesondere durch Umfeldsensoren des Fahrzeugs, erfasst wird und das Fahrmanöver auf Basis der durch die Umfeldsensoren des Fahrzeugs erfassten Umgebungsinformation vollendet wird.

Die DE 10 2014 018 192 A1 hat ein Verfahren zum Steuern eines Fahrzeugs zum Gegenstand, bei welchem aus Fahrdaten des Fahrzeuges eine Solltrajektorie bestimmt wird, welche dem Fahrzeug bei einer automatischen Fahrt zugrunde gelegt wird, wobei bei einer geänderten Umgebung der Fahrt eine, aus aktuellen Fahrdaten des Fahrzeuges ermittelte Trajektorie mit der Solltrajektorie verglichen wird, Abweichungen zwischen der neuen Trajektorie und der Solltrajektorie ermittelt werden und in Abhängigkeit von den Abweichungen eine neue Solltrajektorie eingestellt wird.

Und aus der DE 10 2008 002 598 A1 ist eine Vorrichtung zur semiautonomen Unterstützung der Lenkbewegung eines Fahrzeuges bekannt, mit Unterstützungsmittel zur Bereitstellung von Informationen über Lenkstellungen einer Fahrzeuglenkung und über eine zurückgelegte Strecke bei einer Fahrzeugfahrt. Eine durch eine Lernfahrt eingelernte Soll-Bahn für eine festgelegte Umgebung ist in einer Rechnereinheit ablegbar, und die Unterstützungsmittel sind dazu ausgelegt, auf die Soll-Bahn bei Erreichen einer vorgegebenen Position des Fahrzeuges in der festgelegten Umgebung zurückzugreifen und den Fahrer beim Führen des Fahrzeugs entlang der Soll-Bahn unterstützen.

Es ist Aufgabe der vorliegenden Erfindung, ein im Vergleich zum vorbekannten Stand der Technik verbessertes Verfahren zum Betreiben eines Fahrzeugs, ein verbessertes Steuergerät zum Betreiben eines Fahrzeugs, sowie ein Fahrzeug mit dem verbesserten Steuergerät zur Verfügung zu stellen. Diese Aufgaben werden gelöst durch das Verfahren gemäß Anspruch 1, das Steuergerät gemäß Anspruch 8 sowie das Fahrzeug gemäß Anspruch 9.

Vorteilhafte Weiterbildungen und Ausgestaltungen der Erfindung sind Gegenstand der Unteransprüche und können der Beschreibung und den Figuren entnommen werden.

Erfindungsgemäß wird ein Verfahren zum Betreiben eines Fahrzeugs, insbesondere zum Fahren des Fahrzeugs auf einen vorgegebenen Stellplatz vorgeschlagen, wobei in einer fahrzeugseitigen Speichereinrichtung eine erste Trajektorie für eine automatisierte Fahrt des Fahrzeugs auf den vorgegebenen Stellplatz gespeichert ist, die während einer manuellen Fahrt des Fahrzeugs auf den vorgegebenen Stellplatz erfasst wurde, der ersten Trajektorie Toleranzwerte für eine Abweichung von der ersten Trajektorie zugeordnet sind, um den das Fahrzeug bei einer automatisierten Fahrt auf den vorgegebenen Stellplatz maximal von der ersten Trajektorie abweichen darf, und wobei das Fahrzeug eine Möglichkeit zur Aktivierung einer automatisierten Fahrt auf den vorgegebenen Stellplatz aufweist, wenn sich das Fahrzeug in einem Bereich der Startposition der ersten Trajektorie befindet.

Das Verfahren gemäß der vorliegenden Erfindung ist dadurch gekennzeichnet, dass bei wenigstens einer weiteren manuellen Fahrt des Fahrzeugs auf den vorgegebenen Stellplatz die dabei befahrene weitere Trajektorie automatisch erfasst wird, die erste Trajektorie und die weitere Trajektorie miteinander verglichen werden und für den Fall, dass in Bezug auf wenigstens einen vorgebbaren Punkt der ersten Trajektorie eine Abweichung in Bezug auf den Fahrweg des Fahrzeugs durch die weitere Trajektorie festgestellt wird, diese Abweichung dem vorgebbaren Punkt der ersten Trajektorie zugeordnet wird, derart, dass die festgestellte Abweichung und der dem vorgebbaren Punkt der ersten Trajektorie zugeordnete Toleranzwert addiert und als neuer Toleranzwert für den vorgebbaren Punkt der ersten Trajektorie in der fahrzeugseitigen Speichereinrichtung abgespeichert wird, und die erste Trajektorie und Toleranzwerte entlang der ersten Trajektorie, wahlweise zusammen mit Kenndaten des Fahrzeugs, das die erste Trajektorie und die weiteren Trajektorien während manueller Fahrten auf den vorgegebenen Stellplatz gefahren ist, zu einer fahrzeugexternen Recheneinrichtung übertragen werden und von der fahrzeugexternen Recheneinrichtung dem Fahrzeug und/oder anderen Fahrzeugen zur Verfügung gestellt werden.

Bei einem nur einmaligen Abfahren (und Erlernen) einer Trajektorie muss von geringen Toleranzen in Bezug auf den Abstand und die Ausrichtung in Relation zur gelernten ersten Trajektorie ausgegangen werden, die das Fahrzeug bei einem automatisierten Fahren zu dem vorgegebenen Stellplatz von der gelernten Trajektorie abweichen darf; d.h. die Trajektorie plus die geringen Toleranzen (links von der Trajektorie, rechts von der Trajektorie und in Bezug auf den Haltepunkt auf dem Stellplatz) definieren einen Korridor, entlang dem ein automatisiertes Abfahren zulässig ist. Oftmals wird von Toleranzen im Bereich nicht mehr als 10 cm, 15 cm oder 20 cm ausgegangen.

Wenn erfindungsgemäß automatisch, d.h. ohne einen Eingriff des Fahrers, bei wenigstens einer weiteren manuellen Fahrt auf den Stellplatz die dabei von dem Fahrer gewählte Trajektorie erfasst wird, und wenn diese weitere Trajektorie an wenigstens einem Punkt von der ersten Trajektorie abweicht, kann davon ausgegangen werden, dass auch die weitere Trajektorie einen weiteren zulässigen Bewegungspfad für eine Fahrt auf den vorgegebenen Stellplatz definiert. Daher können die festgestellten Abweichungen zwischen der ersten Trajektorie und der weiteren Trajektorie dazu verwendet werden, an den betreffenden Stellen die Toleranzwerte der ersten Trajektorie zu vergrößern. Daraus ergeben sich ein vergrößerter Fangbereich und Möglichkeiten einer verbesserten Bahnplanung.

Gemäß einer ersten vorteilhaften Weiterbildung des Verfahrens wird bei wenigstens einer zweiten weiteren manuellen Fahrt des Fahrzeugs auf den vorgegebenen Stellplatz die dabei befahrene zweite weitere Trajektorie automatisch erfasst, werden die erste Trajektorie und die zweite weitere Trajektorie miteinander verglichen und wird für den Fall, dass an wenigstens einem vorgebbaren Punkt der ersten Trajektorie eine Abweichung in Bezug auf den Fahrweg des Fahrzeugs durch die zweite weitere Trajektorie festgestellt, diese Abweichung dem vorgebbaren Punkt der ersten Trajektorie zugeordnet, derart, dass die festgestellte Abweichung und der dem vorgebbaren Punkt der ersten Trajektorie zugeordnete Toleranzwert addiert und als neuer Toleranzwert für den vorgebbaren Punkt der ersten Trajektorie in der fahrzeugseitigen Speichereinrichtung abgespeichert, sofern der neue Toleranzwert größer ist als der bereits gespeicherte Toleranzwert.

Gemäß dieser vorteilhaften Weiterbildung besteht die Möglichkeit, dass der zulässige Korridor mit jeder Iteration vergrößert wird, wodurch die Zuverlässigkeit und Verfügbarkeit der Funktion des automatisierten Fahrens auf einen Stellplatz gesteigert und der Fangbereich erweitert werden kann.

Gemäß einer zweiten vorteilhaften Weiterbildung des Verfahrens sind entlang der ersten Trajektorie vorgebbare Punkte vorgegeben, die einen festen Abstand zueinander aufweisen, bevorzugt einen Abstand im Bereich von 5 cm und 30 cm, besonders bevorzugt einen Abstand im Bereich von 10 cm bis 20 cm.

Es hat sich als ausreichend erwiesen, nur an voneinander beabstandeten Punkten, die einen Abstand in dem oben genannten Bereich entlang der ersten Trajektorie zueinander aufweisen, zu überprüfen, ob eine Abweichung zwischen der ersten Trajektorie und einer weiteren Trajektorie gegeben ist oder nicht. Hierdurch verringert sich im Vergleich zu einem kontinuierlichen Abgleich oder zu einem Abgleich in sehr kurzen Abständen die Menge an zu erfassenden und abzusichernden Daten, ohne dass Genauigkeit des zulässigen Korridors in nennenswerter Weise verringert würde.

In vorteilhafter Weise erfolgt eine automatisierte Fahrt zu dem vorgegebenen Stellplatz stets entlang der ersten Trajektorie, sofern und solange durch eine Umfeldüberwachung mittels einer Umfeldsensorik des Fahrzeugs keine Hindernisse entlang der ersten Trajektorie erkannt werden, und erfolgt in vorteilhafter Weise lediglich im Falle des Erkennens eines Hindernisses während einer automatisierten Fahrt entlang der ersten Trajektorie zu dem vorgegebenen Stellplatz ein automatisiertes Umfahren dieses Hindernisses, sofern eine solche Umfahrung unter Einhaltung der in der Speichereinrichtung gespeicherten Toleranzwerte entlang der ersten Trajektorie möglich ist.

Gemäß der vorliegenden Erfindung kann in vorteilhafter Weise weiter vorgesehen sein, dass eine erste Trajektorie und weitere Trajektorien fahrerspezifisch erfasst, fahrerspezifisch miteinander verglichen werden, die erste Trajektorie und sich aufgrund der weiteren Trajektorien ergebende größere Toleranzwerte entlang der ersten Trajektorie fahrerspezifisch in der fahrzeugseitigen Speichereinrichtung gespeichert werden und eine gegebenenfalls durchgeführte automatisierte Fahrt auf den vorgegebenen Stellplatz fahrerspezifisch unter Verwendung der fahrerspezifisch erfassten und abgespeicherten Daten erfolgt.

Weiter ist erfindungsgemäß vorgesehen, dass
- eine erste Trajektorie einer manuellen Fahrt auf einen vorgebbaren Stellplatz und Toleranzwerte entlang der ersten Trajektorie, wahlweise zusammen mit Kenndaten des Fahrzeugs, das die erste Trajektorie und die weiteren Trajektorien während manueller Fahrten auf den vorgegebenen Stellplatz gefahren ist, zu einer fahrzeugexternen Recheneinrichtung übertragen werden und von der fahrzeugexternen Recheneinrichtung dem Fahrzeug und/oder anderen Fahrzeugen zur Verfügung gestellt werden.

Weiter kann in vorteilhafter Weise vorgesehen sein, dass
- Kenndaten des vorgegebenen Stellplatzes zu einer fahrzeugexternen Recheneinrichtung übertragen werden und von der fahrzeugexternen Recheneinrichtung dem Fahrzeug und/oder anderen Fahrzeugen zur Verfügung gestellt werden; und/oder
- das erfindungsgemäße Verfahren oder eine seiner vorteilhaften Weiterbildungen alternativ oder ergänzend zum Fahren eines Fahrzeugs auf einen vorgegebenen Stellplatz auch zum Fahren eines Fahrzeugs von einem vorgegebenen Stellplatz eingerichtet ist.

Die vorliegende Erfindung umfasst auch ein Steuergerät für ein Fahrzeug zur Durchführung des Verfahrens gemäß der vorliegenden Erfindung oder eines seiner vorteilhaften Weiterbildungen.

Das Steuergerät weist eine Speichereinrichtung und eine Steuereinrichtung auf, die mit fahrzeugseitigen Einrichtungen, die zur Aufzeichnung von Trajektorien und zur Durchführung einer automatisierten Fahrt auf einen vorgegebenen Stellplatz und/oder einer automatisierten Wegfahrt von einem vorgegebenen Stellplatz geeignet sind, verbindbar ist.

Von der vorliegenden Erfindung umfasst ist auch ein Fahrzeug, insbesondere Kraftfahrzeug, mit fahrzeugseitigen Einrichtungen, die zur Aufzeichnung von Trajektorien und zur Durchführung einer automatisierten Fahrt auf einen vorgegebenen Stellplatz und/oder einer automatisierten Wegfahrt von einem vorgegebenen Stellplatz geeignet sind. Das Fahrzeug ist dadurch gekennzeichnet, dass es ein Steuergerät gemäß der vorliegenden Erfindung aufweist, das mit den fahrzeugseitigen Einrichtungen verbunden ist.

Die vorliegende Erfindung wird anhand der beigefügten Zeichnungen näher erläutert.

Dabei zeigen:
- Fig. 1: eine beispielhafte Darstellung der Vergrößerung der Toleranzbereiche der ersten Trajektorie durch zwei weitere befahrene Trajektorien;
- Fig. 2: eine beispielhafte Darstellung eines Fahrzeugs gemäß der vorliegenden Erfindung.

Die Darstellungen in den Figuren sind rein schematisch und nicht maßstabsgerecht. Innerhalb der Figuren sind gleiche oder ähnliche Elemente mit gleichen Bezugszeichen versehen.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

Die in der obigen Beschreibung genannten Merkmale und Merkmalskombinationen sowie die in der nachfolgenden Beschreibung von Ausführungsformen, Ausführungsbeispielen und der Figurenbeschreibung genannten und/oder in den Figuren alleine gezeigten Merkmale und Merkmalskombinationen sind nicht nur in der jeweils angegebenen Kombination, sondern auch in anderen Kombinationen oder, in Alleinstellung verwendbar, ohne den Rahmen der vorliegenden Erfindung zu verlassen.

Sofern in der vorliegenden Anmeldung davon gesprochen wird, dass eine "automatisierte" Fahrt oder ein "automatisiertes" Fahren durchgeführt wird, so ist darunter sowohl eine "automatische" Fahrt oder ein "automatisches" Fahren zu verstehen, bei dem von dem Fahrzeug 1 sowohl die Längs- als auch die Quersteuerung übernommen wird, als auch eine "teilautomatische" Fahrt oder ein "teilautomatisches" Fahren, bei dem von dem Fahrzeug 1 die Quersteuerung übernommen wird und der Fahrer für die Längssteuerung, d.h. für die Einlegung der entsprechenden Fahrstufe, die Geschwindigkeit und Beschleunigung einschließlich dem Bremsvorgang verantwortlich ist. Eine "automatische" Fahrt oder ein "automatisches" Fahren kann auch durchgeführt werden, nachdem der Fahrer das Fahrzeug 1 verlassen hat.

Aus dem Stand der Technik sind Fachleuten Verfahren und Vorrichtungen (sowie deren mögliches Zusammenwirken), mit denen ein für die vorliegende Anmeldung relevantes "automatisiertes" Ein- und Ausparken durchführbar ist - und auf denen die vorliegende Erfindung aufbaut - hinlänglich bekannt. Vor diesem Hintergrund erscheint es nicht erforderlich, auf diese Verfahren, und Vorrichtungen sowie auf damit ausgestattete Fahrzeuge in dieser Anmeldung näher einzugehen.

Unter einem "vorgegebenen Stellplatz" ist bspw. ein Parkplatz, eine Garage, ein Garagenstellplatz, etc. zu verstehen, auf dem ein Fahrer das Fahrzeug bereits einmal abgestellt hat und von dem anzunehmen ist, dass er diesen Stellplatz in Zukunft noch mehrere Male anfahren wird. Ein solcher "vorgegebener Stellplatz" kann bspw. ein Stellplatz am Wohnort oder am Arbeitsplatz sein.

Das Verfahren gemäß der vorliegenden Erfindung geht aus von einer Konstellation, bei der in einer fahrzeugseitigen Speichereinrichtung 3 bereits eine erste Trajektorie 4 für eine automatisierte Fahrt des Fahrzeugs 1 auf den vorgegebenen Stellplatz 2 gespeichert ist, die (in einem Vorverfahren) während einer manuellen Fahrt des Fahrzeugs 1 auf den vorgegebenen Stellplatz 2 erfasst wurde.

Dieses Erfassen einer ersten Trajektorie 4 kann in an und für sich evtl. bereits aus dem Stand der Technik bekannten Art und Weise erfolgen, etwa automatisch, wenn anhand erfasster Umgebungsdaten (etwa mittels eines Global Navigation Satellite System (GNSS) ermittelte Koordinaten entlang einer Fahrt, von fahrzeugseitigen Kameraeinrichtungen erfasste Bilder der Umgebung des Fahrzeugs, der Stoppposition, etc.) ermittelt wurde, dass der angefahrene Stellplatz 2 wiederholt vom Fahrzeug 1 angefahren wird, oder manuell, indem durch den Fahrer etwa mittels einer Bedienhandlung bei einer hierfür vorgesehenen fahrzeugseitigen Einrichtung oder eines Sprachbefehls das Erfassen (die Aufzeichnung) der ersten Trajektorie 4 gestartet und gegebenenfalls nach Erreichen des Stellplatzes 2 (der Stoppposition) beendet wird. Nach einer automatischen Erfassung der ersten Trajektorie 4 kann vorgesehen sein, dass dies dem Fahrer mittels einer fahrzeugseitigen Signalisierungseinrichtung (Bildschirm, Lautsprecher, etc.) signalisiert wird und dieser dann entscheiden kann (etwa durch eine Bestätigungshandlung), ob der gerade zurückgelegte Fahrweg auf den Stellplatz als erste Trajektorie 4 für einen vorgegebenen Stellplatz 2 in der fahrzeugseitigen Speichereinrichtung 3 gespeichert werden soll oder nicht. Ebenso kann vorgesehen sein, dass ein Fahrer den betreffenden Stellplatz als einen markiert, für den er keine Erfassung einer ersten Trajektorie 4 wünscht (wobei weiter vorgesehen sein kann, dass er diese Entscheidung zu einem zukünftigen Zeitpunkt wieder ändern kann).

Der Startpunkt der ersten Trajektorie 4 kann ebenfalls in an und für sich eventuell bereits aus dem Stand der Technik bekannten Art und Weise festgelegt werden, etwa automatisch, indem als Startpunkt der ersten Trajektorie 4 eine vorgebbare Position in einem vorgebbaren Abstand zu dem (bereits wiederholt angefahrenen) vorgegebenen Stellplatz 2 gewählt wird, bspw. 10m, 15 m, 20m, 30 m, 40m, 50m, 60 m, 70m, 80m, 90 m oder 100 m, usw., wobei für die Berechnung des vorgebbaren Abstandes die bekannte Lage (Koordinaten) des vorgegebenen Stellplatzes 2 verwendet werden kann. Alternativ oder ergänzend dazu kann vorgesehen sein, dass der Startpunkt der ersten Trajektorie 4 auch manuell von einem Fahrer gewählt oder festgelegt werden kann, etwa durch eine entsprechende Bedienhandlung bei einer hierfür vorgesehenen fahrzeugseitigen Einrichtung oder einen Sprachbefehl. Eine manuelle Wahl kann insoweit von Vorteil sein, als hierdurch als Startpunkt für die erste Trajektorie 4 eine Position des Fahrzeugs 1 gewählt wird, die subjektiv vom Fahrer des Fahrzeugs 1 als (besonders) geeigneter Beginn eines Einparkvorgangs (bzw. als (besonders) geeignetes Ende eines Ausparkvorgangs) in Bezug auf den vorgegebenen Stellplatz 2 angesehen wird. Bei zukünftigen automatisierten Fahrten zu dem vorgegebenen Stellplatz 2 bzw. von dem vorgegebenen Stellplatz 2 beginnen bzw. enden diese so zumindest in der näheren Umgebung der Stelle, die vom Fahrer hierfür vorgesehen ist.

Durch die erste Trajektorie 4 wird ein überfahrbarer Bereich festgelegt, auf dem mit dem Fahrzeug 1 von einem Startpunkt bis auf den vorgegebenen Stellplatz 2 gefahren werden kann, ohne dass das Fahrzeug 1 hierbei mit irgendwelchen, insbesondere dauerhaft vorhandenen Hindernissen (wie etwa Gebäuden, Bäumen, Verkehrsschildern, etc.) kollidieren würde.

Gleichzeitig definiert die erste Trajektorie 4 einen Fahrweg und eine Halteposition (einschließlich der Ausrichtung des Fahrzeugs 1) auf dem vorgegebenen Stellplatz 2, von denen angenommen werden kann, dass diese von dem Fahrer des Fahrzeugs 1 als seinen Vorstellungen und persönlichen Bedürfnissen (etwa bei einem aufgrund einer körperlichen Behinderung erforderlichen vergrößerten Abstand zu einem benachbarten Fahrzeug oder zu einer Wand) entsprechend empfunden werden.

Vor diesem Hintergrund ist gemäß der vorliegenden Erfindung vorgesehen, dass bei einem automatisierten Anfahren zu und auf den vorgegebenen Stellplatz 2 (und gegebenenfalls auch von dem vorgegebenen Stellplatz 2 weg) grundsätzlich ein Fahrweg gewählt wird, der der ersten Trajektorie 4 entspricht.

Das Erkennen, ob sich ein Fahrzeug 1 in der Nähe des Startpunkts der ersten Trajektorie 4, also innerhalb eines zulässigen Startbereichs 6 für ein automatisiertes Fahren befindet, kann in an sich evtl. aus dem Stand der Technik bereits bekannter Art und Weise erfolgen, bspw. aufgrund der unter Verwendung eines GNSS ermittelten Koordinaten des Fahrzeugs 1 oder aufgrund eines Vergleichs von im Fahrzeug 1 vorhandener Bilddaten, die am Startpunkt der Erfassung der ersten Trajektorie 4 erfasst wurden, mit aktuell erfassten Bilddaten der Umgebung des Fahrzeugs 1.

Da das Fahrzeug 1 zu Beginn des automatisierten Anfahrens regelmäßig nicht exakt den Startpunkt einnehmen wird, der bei der Aufzeichnung der ersten Trajektorie 4 gegeben war, wird es oftmals erforderlich sein, dass in einem ersten Abschnitt des automatisierten Anfahrens ein Fahrweg des Fahrzeugs 1 gewählt wird, durch den sich dieser der ersten Trajektorie 4 annähert, so dass im restlichen Abschnitt des automatisierten Anfahrens der Fahrweg dann der ersten Trajektorie 4 entspricht.

Der aufgezeichneten ersten Trajektorie eines Fahrzeugs 1 sind vergleichsweise kleine Toleranzwerte 5, 5' für eine Abweichung von der ersten Trajektorie 4 zugeordnet, um die das Fahrzeug 1 bei einer automatisierten Fahrt maximal von dieser Trajektorie 4 abweichen darf. Diese Toleranzwerte 5, 5' können bspw. fest vorgegeben sein und auf empirischen Erfahrungswerten beruhen, etwa darauf, welchen Abstand ein durchschnittlicher Fahrer von einem Randstein, einer anderen Fahrbahnbegrenzung, einem Verkehrszeichen, einer vor dem Fahrzeug 1 befindlichen Wand, etc. regelmäßig einhält.

Um diese vergleichsweise kleinen Toleranzwerte 5, 5' vergrößern zu können, ist gemäß der vorliegenden Erfindung vorgesehen, dass bei wenigstens einer weiteren manuellen Fahrt des Fahrzeugs 1 auf den vorgegebenen Stellplatz 2 die dabei befahrene weitere Trajektorie 7 automatisch erfasst wird, die erste Trajektorie 4 und die weitere Trajektorie 7 miteinander verglichen werden und für den Fall, dass in Bezug auf wenigstens einen vorgebbaren Punkt der ersten Trajektorie 4 eine Abweichung in Bezug auf den Fahrweg des Fahrzeugs 1 durch die weitere Trajektorie 7 festgestellt wird, diese Abweichung dem vorgebbaren Punkt der ersten Trajektorie 4 zugeordnet wird, derart, dass die festgestellte Abweichung und der dem vorgebbaren Punkt der ersten Trajektorie 4 zugeordnete Toleranzwert addiert und als neuer Toleranzwert für den vorgebbaren Punkt der ersten Trajektorie 4 in der fahrzeugseitigen Speichereinrichtung 3 abgespeichert wird.

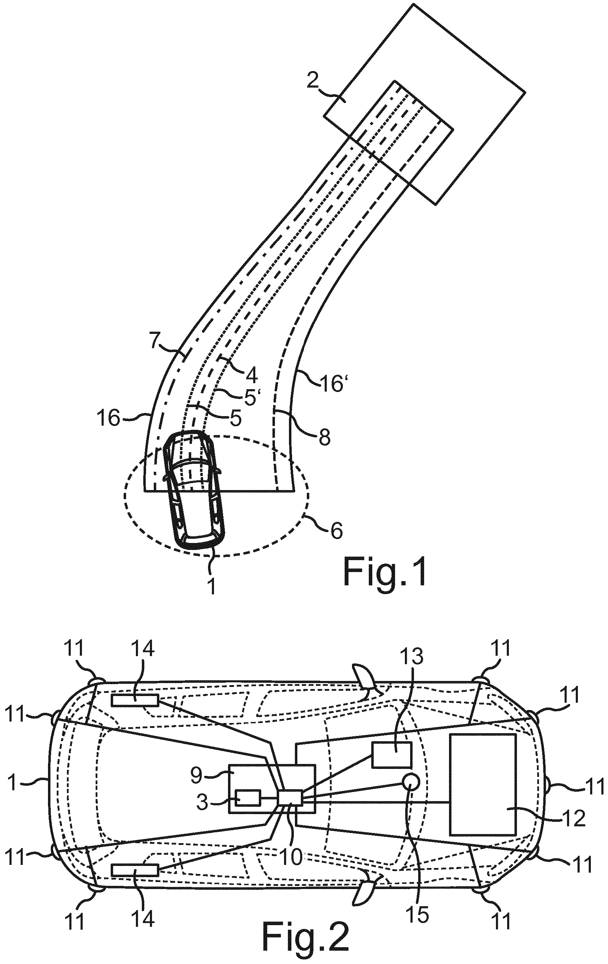

Wie in Fig. 1 schematisch dargestellt ist, kann durch das Verfahren gemäß der vorliegenden Erfindung durch die weitere Trajektorie 7 der ursprüngliche, in der Fig. 1 linksseitig dargestellte Toleranzwert 5 auf die linksseitig dargestellte Toleranzgrenze 16 erweitert werden. Damit besteht für das Fahrzeug 1 allein durch die weitere Trajektorie 7 ein "Trajektorie-Bereich" zur Verfügung, der von dem in Fig. 1 rechtsseitig dargestellten Toleranzwert 5' bis zur linksseitig dargestellten Toleranzgrenze 16 reicht.

Gemäß der vorliegenden Erfindung ist die Anzahl an weiteren Trajektorien 7, 8 nicht besonders beschränkt und es können grundsätzlich beliebig viele weitere Trajektorien 7, 8 im Rahmen von manuellen Fahrten auf den vorgegebenen Stellplatz 2 erfasst, ausgewertet und entsprechende neue Toleranzwerte bzw. Toleranzgrenzen in die fahrzeugseitige Datenbank 3 eingetragen werden.

In Fig. 1 ist schematisch und beispielhaft eine zweite weitere Trajektorie 8 dargestellt, durch die der rechtsseitige dargestellte Toleranzwert 5' auf die rechtsseitig dargestellte Toleranzgrenze 16' erweitert werden konnte.

Die Zuordnung einer Abweichung einer weiteren Trajektorie 7, 8 zu einem "vorgebbaren" Punkt der ersten Trajektorie 4 kann auf jede geeignete Art und Weise erfolgen, etwa dadurch, dass von einem vorgegebenen Punkt der ersten Trajektorie 4 eine Senkrechte zu der an dem vorgegebenen Punkt der ersten Trajektorie 4 gegebenen Tangente gebildet wird, und der Abstand von der ersten Trajektorie 4 bis zum Schnittpunkt der Senkrechten mit der weiteren Trajektorie 7, 8 als Wert für die Abweichung der weiteren Trajektorie bis 7, 8 von der ersten Trajektorie 4 verwendet wird.

Es hat sich als ausreichend erwiesen, nur an voneinander beabstandeten Punkten entlang der ersten Trajektorie 4 zu überprüfen, ob eine Abweichung davon bei einer weiteren Trajektorie 7, 8 gegeben ist, wobei als geeigneter Abstand der jeweiligen Punkte zueinander etwa einer gewählt werden kann, der im Bereich zwischen 5 cm und 30 cm, bevorzugt im Bereich von 10 cm bis 20 cm liegt. Die Toleranzbereiche bzw. die Toleranzgrenzen, die bei den zwischen den vorgegebenen Punkten der ersten Trajektorie 4 gegeben sind, können dann bspw. mittels Interpolation approximiert werden.

Durch die Verwendung von nur diskreten, voneinander beabstandeten Punkten entlang der ersten Trajektorie 4 verringert sich im Vergleich zu einem kontinuierlichen Abgleich oder zu einem Abgleich in sehr kurzen Abständen die Menge an zu erfassenden und abzusichernden Daten, ohne dass Genauigkeit des zulässigen Korridors in nennenswerter Weise verringert würde.

Die durch weitere Trajektorien 7, 8 erweiterten Toleranzgrenzen 16, 16' können dazu verwendet werden, im Falle einer automatisierten Fahrt in Richtung des vorgegebenen Stellplatzes 2 entlang der ersten Trajektorie 4 ein automatisiertes Umfahren eines Hindernisses durchzuführen, das durch eine Umfeldüberwachung mittels einer Umfeldsensorik 11 des Fahrzeugs 1 erkannt wurde und bei dem bei einer (Weiter)Fahrt entlang der ersten Trajektorie 4 eine Kollision zwischen dem Fahrzeug 1 und dem Hindernis eintreten würde.

Ist ein solches automatisiertes Umfahren selbst unter Ausnutzung der erweiterten Toleranzgrenzen 16, 16' nicht möglich, wird in vorteilhafter Weise die automatisierte Fährt nicht begonnen oder eine bereits begonnene automatisierte Fahrt zumindest unterbrochen, und dies dem Fahrer durch eine fahrzeugseitige Einrichtung signalisiert.

Der Fahrer kann dann entweder eine manuelle Umfahrung des Hindernisses vornehmen, wobei nach der Umfahrung die automatisierte Anfahrt begonnen oder fortgesetzt werden kann, oder - sofern möglich - das erkannte Hindernis zumindest so weit entfernen, dass die automatisierte Anfahrt zu dem vorgegebenen Stellplatz 2 begonnen oder weiter fortgesetzt werden kann.

Von der vorliegenden Erfindung umfasst ist auch eine Ausgestaltung des Verfahrens, bei der eine erste Trajektorie 1 und weitere Trajektorien 7, 8 fahrerspezifisch erfasst, fahrerspezifisch miteinander verglichen werden, die erste Trajektorie 4 und sich aufgrund der weiteren Trajektorien 7, 8 ergebende größere Toleranzwerte entlang der ersten Trajektorie 4 fahrerspezifisch in der fahrzeugseitigen Speichereinrichtung 3 gespeichert werden und eine gegebenenfalls durchgeführte automatisierte Fahrt auf den vorgegebenen Stellplatz 2 fahrerspezifisch unter Verwendung der fahrerspezifisch erfassten und abgespeicherten Daten erfolgt.

Vorrichtungen und Verfahren zum Erkennen eines speziellen Fahrers eines Fahrzeugs 1 sind Fachleuten aus dem Stand der Technik hinlänglich bekannt, etwa solche unter Zuhilfenahme von im verwendeten Fahrzeugschlüssel vorhandenen fahrerspezifischen Daten, unter Zuhilfenahme von Gesichts- und/oder Stimmerkennung im Fahrzeuginnenraum, unter Durchführung entsprechender Bedienhandlungen eines Fahrers, etc., sodass hierauf in der vorliegenden Anmeldung nicht näher darauf eingegangen zu werden braucht.

Eine fahrerspezifische Ausgestaltung des Verfahrens gemäß der vorliegenden Erfindung kann unter verschiedenen Aspekten vorteilhaft sein. So kann etwa ein Fahrer von sehr vorsichtiger Natur sein, sodass dieser bei manuellen Fahrten zu dem vorgegebenen Stellplatz 2 stets sehr ähnliche weitere Trajektorien 7, 8 wählt, die vergleichsweise nahe entlang der ersten Trajektorie 4 verlaufen. Hierdurch ergeben sich für diesen Fahrer auch nur vergleichsweise gering erweiterte Toleranzgrenzen 16, 16'.

Durch eine fahrerspezifische Ausgestaltung des Verfahrens wird bei diesem Fahrer bei einer automatischen Fahrt auch nur eine "sehr vorsichtige" Umfahrung eines erkannten Hindernisses durchgeführt, wodurch mögliche Unruhe- oder Angstzustände bei diesem Fahrer vermieden werden können. Als weitere Beispiele für Vorteile einer fahrerspezifischen Ausgestaltung des Verfahrens gemäß der vorliegenden Erfindung kann - wie oben bereits erwähnt - ein im Vergleich zu einem Durchschnittsfahrer vergrößerter Platzbedarf für das Verlassen des Fahrzeugs 1 genannt werden oder ein Fahrer, der regelmäßig Kontrollen im (frontseitigen) Motorraum des Fahrzeugs 1 durchführen möchte und daher regelmäßig in einem größeren Abstand vor einer Mauer des vorgegebenen Stellplatzes 2 parkt, als dies bei einem Durchschnittsfahrer der Fall ist.

Gemäß der vorliegenden Erfindung ist vorgesehen, dass eine erste Trajektorie 4 einer manuellen Fahrt auf einen vorgebbaren Stellplatz und Toleranzwerte entlang der ersten Trajektorie 4, wahlweise zusammen mit Kenndaten des Fahrzeugs 1, das die erste Trajektorie 4 und die weiteren Trajektorien 7, 8 während manueller Fahrten auf den vorgegebenen Stellplatz 2 gefahren ist, zu einer fahrzeugexternen Recheneinrichtung (bspw. ein mit dem Internet verbundener Server) übertragen werden und von der fahrzeugexternen Recheneinrichtung dem Fahrzeug 1 und/oder anderen Fahrzeugen zur Verfügung gestellt werden.

Ebenso kann in vorteilhafter Weise vorgesehen sein, dass auch Kenndaten des vorgegebenen Stellplatzes 2 zu einer fahrzeugexternen Recheneinrichtung (bspw. ein mit dem Internet verbundener Server) übertragen werden und von der fahrzeugexternen Recheneinrichtung dem Fahrzeug 1 und/oder anderen Fahrzeugen zur Verfügung gestellt werden.

Die Übertragung der Daten zu der fahrzeugexternen Recheneinrichtung kann bevorzugt unter Verwendung eines Funksystems erfolgen, etwa unter Verwendung eines Mobilfunkstandards. Hierzu ist selbstverständlich bei dem Fahrzeug 1 eine entsprechende Einrichtung vorzusehen oder es ist dem Fahrzeug 1 eine entsprechende Einrichtung (etwa ein Mobiltelefon) zuzuordnen. Im letzteren Fall kann die Übertragung der Daten von dem Fahrzeug 1 zu der diesem zugeordneten Einrichtung auch mittels einer drahtgebundenen Verbindung (etwa einer Busverbindung, etwa USB, CAN) oder einer kurzreichweitigen Verbindung (WLAN, NFC, Bluetooth®, Infrarotlicht) erfolgen. Die auf das dem Fahrzeug 1 zugeordneten Einrichtung übertragenen Daten können dann etwa unter Verwendung eines Mobilfunkstandards von der Einrichtung zu der fahrzeugexternen Recheneinrichtung übermittelt werden.

Trajektorien 4, 7, 8 stellen die Bahnkurven dar, die ein Fahrzeug 1 zurückgelegt hat. Der für eine Anfahrt zu einem vorgegebenen Stellplatz 2 tatsächlich benötigte "Fahrschlauch" ergibt sich jedoch erst unter Berücksichtigung von Kenndaten des Fahrzeugs 1, welches die Trajektorien 4, 7, 8 zurückgelegt hat. Zu diesen Kenndaten gehören bspw. die Breite sowie die Höhe des Fahrzeugs 1. Aus den (erfolgreichen) Trajektorien 4, 7, 8 und den Kenndaten des Fahrzeugs 1 kann somit der tatsächlich jedenfalls zur Verfügung stehende Fahrbereich berechnet werden.

Auch ergibt sich aus den, sich aus den Trajektorien 4, 7, 8 ergebenden Haltepositionen des Fahrzeugs 1 auf dem vorgegebenen Stellplatz 2 außer den Koordinaten des vorgegebenen Stellplatz 2 keine weiteren Informationen in Bezug auf den vorgegebenen Stellplatz 2, wie etwa dessen Länge, Breite und Höhe (etwa bei einer Garage oder einem Garagenstellplatz).

Sollen gemäß einer Ausgestaltung des Verfahrens gemäß der vorliegenden Erfindung die von dem Fahrzeug 1 auf eine fahrzeugexterne Recheneinrichtung übertragenen Daten wiederum nur dem gleichen Fahrzeug 1 zur Verfügung gestellt werden, so ist es ausreichend, wenn die erste Trajektorie 4 sowie die erweiterten Toleranzwerte entlang der ersten Trajektorie 4, die sich aufgrund weiterer, entlang manueller Fahrten aufgezeichneter Trajektorien 7, 8 ergeben haben, zu der fahrzeugexternen Recheneinrichtung übertragen werden. Werden diese Daten von der fahrzeugexternen Recheneinrichtung wieder zu dem Fahrzeug 1 übertragen, so können diese Daten ohne weiteres wieder für automatisierte Fahrten zu dem vorgegebenen Stellplatz 2 verwendet werden, da sich diese Daten bereits in der Vergangenheit als für dieses spezielle Fahrzeug 1 geeignete erwiesen haben.

Ein solches Übertragen von Daten zu einer fahrzeugexternen Recheneinrichtung und ein späteres Herunterladen dieser Daten zu dem Fahrzeug 1 ist bspw. dann von Vorteil, wenn nur ein begrenzter Datenspeicher bei dem Fahrzeug 1 vorhanden ist (bspw. für 4 oder 5 vorgegebene Stellplätze 2), dieses jedoch eine größere Anzahl an vorgegebenen Stellplätzen 2 anfährt. In einem solchen Fall können aktuell nicht benötigte Daten bezüglich eines oder mehrerer vorgegebener Stellplätze 2 von dem Fahrzeug 1 zu einer fahrzeugexternen Recheneinrichtung hochgeladen und nur bei Bedarf wieder von der fahrzeugexternen Recheneinrichtung heruntergeladen und im Fahrzeug 1 verwendet werden.

Wenn einmal erfasste Daten bezüglich eines vorgegebenen Stellplatzes 2, eine erste Trajektorie 4 und Toleranzwerte entlang der ersten Trajektorie 4 für eine automatisierte Anfahrt auf den vorgegebenen Stellplatz 2 weiteren Fahrzeugen zur Verfügung gestellt werden soll, sodass auch diese weiteren Fahrzeuge nach dem Herunterladen der entsprechenden Daten ohne vorheriges Anlernen oder Abfahren einer geeigneten Trajektorie automatisiert auf den vorgegebenen Stellplatz 2 gefahren werden können, ist es sinnvoll oder gar erforderlich, wenn auch Kenndaten des Fahrzeugs 1, das die erste Trajektorie 4 und die weiteren Trajektorien 7, 8 während manueller Fahrten auf den vorgegebenen Stellplatz 2 gefahren ist und/oder Kenndaten des vorgegebenen Stellplatzes 2 zu der fahrzeugexternen Recheneinrichtung übertragen werden.

Aus den Kenndaten des Fahrzeugs 1 kann in Verbindung mit der ersten Trajektorie 4 und den dieser zugeordneten Toleranzwerten der tatsächlich jedenfalls zur Verfügung stehende Fahrschlauch ermittelt werden. Dieser jedenfalls zur Verfügung stehende Fahrschlauch kann dann mit dem Fahrschlauch verglichen werden, der sich aufgrund der Kenndaten des weiteren Fahrzeugs entlang der ersten Trajektorie 4 ergibt. Eine entsprechende Berechnung kann bspw. durch eine Recheneinrichtung des weiteren Fahrzeugs durchgeführt werden.

Ergibt dieser Vergleich, dass das weitere Fahrzeug an einem Punkt entlang der Anfahrt zu dem vorgegebenen Stellplatz 2 einen größeren Fahrschlauch benötigt, als sich aus den zu der externen Recheneinrichtung übertragenen Daten ergibt, kann durch das weitere Fahrzeug aufgrund dieser Daten keine automatisierte Anfahrt zu und auf den vorgegebenen Stellplatz 2 durchgeführt werden.

Entsprechendes gilt, wenn die Kenndaten bezüglich des vorgegebenen Stellplatzes 2 ein Abstellen des weiteren Fahrzeugs auf dem vorgegebenen Stellplatz 2 nicht ermöglichen (etwa weil das weitere Fahrzeug eine zu große Länge, Breite und/oder Höhe aufweist).

Das erfindungsgemäße Verfahren sowie seine vorteilhaften Weiterbildungen und Ausgestaltungen sind selbstverständlich nicht auf eine Fahrt zu und auf den vorgegebenen Stellplatz 2 (Parkvorgang) beschränkt, sondern können natürlich auch für eine automatisierte Fahrt von einem vorgegebenen Stellplatz 2 (Ausparkvorgang) verwendet werden, d.h. es kann das erfindungsgemäße Verfahren sowie seine vorteilhaften Weiterbildungen und Ausgestaltungen auch für eine automatisierte Fahrt von einem vorgegebenen Stellplatz 2 eingerichtet sein.

Hierzu können bspw. eine erste Trajektorie 4 für eine Fahrt zu und auf den vorgegebenen Stellplatz 2 und eine erste Trajektorie 4 für eine Fahrt von dem vorgegebenen Stellplatz 2 in der fahrzeugseitigen Speichereinrichtung 3 gespeichert sein. Derartige, voneinander verschiedene erste Trajektorien 4 sind bspw. sinnvoll, wenn bei einem Einparkvorgang ein Fahrzeug 1 etwa anfänglich unter einer Linkskurve vorwärts in Richtung des vorgegebenen Stellplatzes 2 fährt, am Ende eines Ausparkvorgangs von dem vorgegebenen Stellplatz 2 jedoch rückwärts nach rechts fahren soll.

Von der vorliegenden Erfindung umfasst ist auch ein Steuergerät 9 für ein Fahrzeug 1, das eine Speichereinrichtung 3 und eine Steuereinrichtung 10 aufweist, die mit fahrzeugseitigen Einrichtungen 11, 12, 13, 14, 15, die zur Aufzeichnung von Trajektorien 4, 7, 8 und zur Durchführung einer automatisierten Fahrt auf einen vorgegebenen Stellplatz 2 und/oder einer automatisierten Wegfahrt von einem vorgegebenen Stellplatz 2 geeignet sind, verbindbar ist,

Das Steuergerät 9 ist dadurch gekennzeichnet, dass es dazu eingerichtet ist, das erfindungsgemäße Verfahren oder eines seiner vorteilhaften Weiterbildungen und Ausgestaltungen durchzuführen.

Bei den fahrzeugseitigen Einrichtungen 11, 12, 13, 14, 15 kann es sich etwa um Umfeldsensoren 11 (Radarsensoren, Ultraschallsensoren, Kameraeinrichtungen, etc.), den Antriebsstrang 12 (einschließlich Motor und Getriebe), die Lenkung 13, die Bremsen 14, einen GPS-Empfähger 15, etc. handeln. Diese Aufzählung ist nicht abschließend zu verstehen und es kann die Steuereinrichtung 10 mit weiteren fahrzeugseitigen Einrichtungen verbunden sein, die ein Fachmann für den erfindungsgemäßen Zweck als sinnvoll oder notwendig erachtet.

Von der vorliegenden Erfindung ist auch ein Fahrzeug 1, insbesondere ein Kraftfahrzeug umfasst, mit fahrzeugseitigen Einrichtungen 11, 12, 13, 14, 15, die zur Aufzeichnung von Trajektorien und zur Durchführung einer automatisierten Fahrt auf einen vorgegebenen Stellplatz 2 und/oder einer automatisierten Wegfahrt von einem vorgegebenen Stellplatz 2 geeignet sind.

Das Fahrzeug 1 ist dadurch gekennzeichnet, dass es ein Steuergerät 9 gemäß der vorliegenden Erfindung aufweist, das mit den fahrzeugseitigen Einrichtungen 11, 12, 13, 14, 15 verbunden ist.

Neben den genannten fahrzeugseitigen Einrichtungen 11, 12, 13, 14, 15 kann das Fahrzeug weitere sinnvolle und/oder notwendige Einrichtungen aufweisen, etwa eine Auswertungseinrichtung zur Auswertung von durch eine oder mehrere Kameraeinrichtungen erfasster Bilddaten, eine Navigationseinrichtung zur überlagerten Darstellung der Trajektorie(n) mit digitalen Straßendaten, etc. Auch diese weiteren Einrichtungen können mit dem Steuergerät 9 verbunden sein.

Gemäß der vorliegenden Erfindung sind weitere Ausgestaltungen und Modifikationen möglich, etwa kann vorgesehen sein, dass eine erste Trajektorie 4 aus der fahrzeugseitigen Speichereinrichtung 3 von einem Fahrer gelöscht werden kann und durch eine neue erste Trajektorie 4 ersetzt werden kann. Dies ist bspw. dann sinnvoll, wenn ein Fahrer eine bestehende die erste Trajektorie 4 für einen vorgegebenen Stellplatz 2 nicht oder nicht mehr für optimal erachtet oder wenn sich in Bezug auf einen vorgegebenen Stellplatz 2 die Bedingungen geändert haben (bspw. wenn eine Zufahrt zu dem vorgegebenen Stellplatz 2 innerhalb der ersten Trajektorie 4 verschmälert oder verlegt wurde, ein dauerhaftes Hindernis entlang der ersten Trajektorie 4 gegeben ist, etc.).

Eine Neuerfassung einer ersten Trajektorie 4 kann gemäß dem ursprünglich vorgesehenen Verfahren zum Abspeichern einer ersten Trajektorie 4 in der fahrzeugseitigen Speichereinrichtung 3 erfolgen, also entweder automatisch während einer manuellen Fahrt oder aufgrund einer entsprechenden Bedienhandlung durch den Fahrer.

### Bezugszeichenliste

- 1: Fahrzeug
- 2: Stellplatz
- 3: fahrzeugseitige Speichereinrichtung
- 4: erste Trajektorie
- 5, 5': Toleranzwerte
- 6: Startbereich für automatisiertes Fahren
- 7: weitere Trajektorie
- 8: zweite weitere Trajektorie
- 9: Steuergerät
- 10: Steuereinrichtung
- 11: Umfeldsensoren
- 12: Antriebsstrang
- 13: Lenkung
- 14: Bremsen
- 15: GPS-Empfänger
- 16, 16': erweiterte Toleranzgrenze

## Patentansprüche

1. Verfahren zum Betreiben eines Fahrzeugs (1), insbesondere zum Fahren des Fahrzeugs auf einen vorgegebenen Stellplatz (2), wobei in einer fahrzeugseitigen Speichereinrichtung (3) eine erste Trajektorie (4) für eine automatisierte Fahrt des Fahrzeugs (1) auf den vorgegebenen Stellplatz (2) gespeichert ist, die während einer manuellen Fahrt des Fahrzeugs (1) auf den vorgegebenen Stellplatz (2) erfasst wurde, der ersten Trajektorie Toleranzwerte (5, 5') für eine Abweichung von der ersten Trajektorie (4) zugeordnet sind, um den das Fahrzeug (1) bei einer automatisierten Fahrt auf den vorgegebenen Stellplatz (2) maximal von der ersten Trajektorie (4) abweichen darf, und wobei das Fahrzeug (1) eine Möglichkeit zur Aktivierung einer automatisierten Fahrt auf den vorgegebenen Stellplatz (2) aufweist, wenn sich das Fahrzeug (2) in einem Bereich der Startposition (6) der ersten Trajektorie befindet, wobei bei wenigstens einer weiteren manuellen Fahrt des Fahrzeugs (1) auf den vorgegebenen Stellplatz (2) die dabei befahrene weitere Trajektorie (7) automatisch erfasst wird, die erste Trajektorie (4) und die weitere Trajektorie (7) miteinander verglichen werden und **dadurch gekennzeichnet, dass** für den Fall, dass in Bezug auf wenigstens einen vorgebbaren Punkt der ersten Trajektorie (4) eine Abweichung in Bezug auf den Fahrweg des Fahrzeugs (1) durch die weitere Trajektorie (7) festgestellt wird, diese Abweichung dem vorgebbaren Punkt der ersten Trajektorie (4) zugeordnet wird, derart, dass die festgestellte Abweichung und der dem vorgebbaren Punkt der ersten Trajektorie (4) zugeordnete Toleranzwert addiert und als neuer Toleranzwert für den vorgebbaren Punkt der ersten Trajektorie (4) in der fahrzeugseitigen Speichereinrichtung (3) abgespeichert wird, und
die erste Trajektorie (4) und Toleranzwerte entlang der ersten Trajektorie (4), wahlweise zusammen mit Kenndaten des Fahrzeugs (1), das die erste Trajektorie (4) und die weiteren Trajektorien (7, 8) während manueller Fahrten auf den vorgegebenen Stellplatz (2) gefahren ist, zu einer fahrzeugexternen Recheneinrichtung übertragen werden und von der fahrzeugexternen Recheneinrichtung dem Fahrzeug (1) und/oder anderen Fahrzeugen zur Verfügung gestellt werden.

2. Verfahren gemäß Anspruch 1,
**dadurch gekennzeichnet, dass**
bei wenigstens einer zweiten weiteren manuellen Fahrt des Fahrzeugs (1) auf den vorgegebenen Stellplatz (2) die dabei befahrene zweite weitere Trajektorie (8) automatisch erfasst wird, die erste Trajektorie (4) und die zweite weitere Trajektorie (8) miteinander verglichen werden und für den Fall, dass an wenigstens einem vorgebbaren Punkt der ersten Trajektorie (4) eine Abweichung in Bezug auf den Fahrweg des Fahrzeugs (2) durch die zweite weitere Trajektorie (8) festgestellt wird, diese Abweichung dem vorgebbaren Punkt der ersten Trajektorie (4) zugeordnet wird, derart, dass die festgestellte Abweichung und der dem vorgebbaren Punkt der ersten Trajektorie (4) zugeordnete Toleranzwert addiert und als neuer Toleranzwert für den vorgebbaren Punkt der ersten Trajektorie (4) in der fahrzeugseitigen Speichereinrichtung (3) abgespeichert wird, sofern der neue Toleranzwert größer ist als der bereits gespeicherte Toleranzwert.

3. Verfahren gemäß Anspruch 1 oder 2,
**dadurch gekennzeichnet, dass**
entlang der der ersten Trajektorie (4) vorgebbare Punkte vorgegeben sind, die einen festen Abstand zueinander aufweisen, bevorzugt einen Abstand im Bereich von 5 cm und 30 cm, besonders bevorzugt einen Abstand im Bereich von 10 cm bis 20 cm.

4. Verfahren gemäß einem der vorhergehenden Ansprüche,
**dadurch gekennzeichnet, dass**
eine automatisierte Fahrt zu dem vorgegebenen Stellplatz (2) stets entlang der ersten Trajektorie (4) erfolgt, sofern und solange durch eine Umfeldüberwachung mittels einer Umfeldsensorik des Fahrzeugs (1) keine Hindernisse entlang der ersten Trajektorie (4) erkannt werden.

5. Verfahren gemäß Anspruch 4,
**dadurch gekennzeichnet, dass**
im Falle des Erkennens eines Hindernisses entlang der ersten Trajektorie (4) während einer automatisierten Fahrt zu dem vorgegebenen Stellplatz (2) ein automatisiertes Umfahren des Hindernisses erfolgt, sofern eine solche Umfahrung unter Einhaltung der in der Speichereinrichtung (3) gespeicherten Toleranzwerte entlang der ersten Trajektorie möglich ist.

6. Verfahren gemäß einem der vorhergehenden Ansprüche,
**dadurch gekennzeichnet, dass**
eine erste Trajektorie (4) und weitere Trajektorien (7, 8) fahrerspezifisch erfasst, fahrerspezifisch miteinander verglichen werden, die erste Trajektorie (4) und sich aufgrund der weiteren Trajektorien (7, 8) ergebende größere Toleranzwerte entlang der ersten Trajektorie (4) fahrerspezifisch in der fahrzeugseitigen Speichereinrichtung (3) gespeichert werden und eine gegebenenfalls durchgeführte automatisierte Fahrt auf den vorgegebenen Stellplatz (2) fahrerspezifisch unter Verwendung der fahrerspezifisch erfassten und abgespeicherten Daten erfolgt.

7. Verfahren gemäß einem der vorhergehenden Ansprüche,
**dadurch gekennzeichnet, dass**.
- auch Kenndaten des vorgegebenen Stellplatzes (2) zu einer fahrzeugexternen Recheneinrichtung übertragen werden und von der fahrzeugexternen Recheneinrichtung dem Fahrzeug (1) und/oder anderen Fahrzeugen zur Verfügung gestellt werden;
und/oder
- dieses alternativ oder ergänzend zum Fahren eines Fahrzeugs auf einen vorgegebenen Stellplatz (2) auch zum Fahren eines Fahrzeugs (1) von einem vorgegebenen Stellplatz (2) eingerichtet ist.

8. Steuergerät (9) für ein Fahrzeug (1), aufweisend eine Speichereinrichtung (3) und eine Steuereinrichtung (10), die mit fahrzeugseitigen Einrichtungen (11, 12, 13, 14, 15), die zur Aufzeichnung von Trajektorien (4, 7, 8) und zur Durchführung einer automatisierten Fahrt auf einen vorgegebenen Stellplatz (2) und/oder einer automatisierten Wegfahrt von einem vorgegebenen Stellplatz (2) geeignet sind, verbindbar ist,
**dadurch gekennzeichnet, dass**
das Steuergerät (9) dazu eingerichtet ist, eines der Verfahren gemäß einem der Ansprüche 1 bis 7 durchzuführen.

9. Fahrzeug (1), insbesondere Kraftfahrzeug, mit fahrzeugseitigen Einrichtungen (11, 12, 13, 14, 15), die zur Aufzeichnung von Trajektorien und zur Durchführung einer automatisierten Fahrt auf einen vorgegebenen Stellplatz (2) und/oder einer automatisierten Wegfahrt von einem vorgegebenen Stellplatz (2) geeignet sind,
**dadurch gekennzeichnet, dass**
es ein Steuergerät (9) gemäß Anspruch 8 aufweist, das mit den fahrzeugseitigen Einrichtungen (11, 12, 13, 14, 15) verbunden ist.

## Claims

1. Method for operating a vehicle (1), in particular for driving the vehicle to a predefined parking space (2), wherein a first trajectory (4) for an automated journey of the vehicle (1) to the predefined parking space (2), which was captured during a manual journey of the vehicle (1) to the predefined parking space (2), is stored in a vehicle storage device (3), tolerance values (5, 5') for a deviation from the first trajectory (4), by which the vehicle (1) can deviate at most from the first trajectory (4) during an automated journey to the predefined parking space (2), are assigned to the first trajectory, and wherein the vehicle (1) has a possibility for activating an automated journey to the predefined parking space (2) if the vehicle (2) is in a region of the starting position (6) of the first trajectory,
wherein, during at least one further manual journey of the vehicle (1) to the predefined parking space (2), the further trajectory (7) driven along in the process is automatically captured, and the first trajectory (4) and the further trajectory (7) are compared with one another,
**characterized in that**,
if a deviation with respect to the route of the vehicle (1) is determined by means of the further trajectory (7) with respect to at least one predefinable point of the first trajectory (4), this deviation is assigned to the predefinable point of the first trajectory (4) in such a manner that the determined deviation and the tolerance value assigned to the predefinable point of the first trajectory (4) are added and are stored as the new tolerance value for the predefinable point of the first trajectory (4) in the vehicle storage device (3), and
the first trajectory (4) and tolerance values along the first trajectory (4), optionally together with characteristic data relating to the vehicle (1) which has driven the first trajectory (4) and the further trajectories (7, 8) during manual journeys to the predefined parking space (2), are transmitted to a computing device outside the vehicle and are made available to the vehicle (1) and/or to other vehicles by the computing device outside the vehicle.

2. Method according to Claim 1,
**characterized in that**,
during at least one second further manual journey of the vehicle (1) to the predefined parking space (2), the second further trajectory (8) driven along in the process is automatically captured, the first trajectory (4) and the second further trajectory (8) are compared with one another, and, if a deviation with respect to the route of the vehicle (2) is determined by means of the second further trajectory (8) at the at least one predefinable point of the first trajectory (4), this deviation is assigned to the predefinable point of the first trajectory (4) in such a manner that the determined deviation and the tolerance value assigned to the predefinable point of the first trajectory (4) are added and are stored as a new tolerance value for the predefinable point of the first trajectory (4) in the vehicle storage device (3) provided that the new tolerance value is greater than the tolerance value which has already been stored.

3. Method according to Claim 1 or 2,
**characterized in that**
predefinable points are predefined along the first trajectory (4) and are at a fixed distance from one another, preferably a distance in the range from 5 cm to 30 cm, particularly preferably a distance in the range from 10 cm to 20 cm.

4. Method according to one of the preceding claims,
**characterized in that**
an automated journey to the predefined parking space (2) is always effected along the first trajectory (4) provided that and as long as no obstacles are detected along the first trajectory (4) by environment monitoring by means of an environment sensor system of the vehicle (1).

5. Method according to Claim 4,
**characterized in that**,
if an obstacle is detected along the first trajectory (4) during an automated journey to the predefined parking space (2), the obstacle is bypassed in an automated manner provided that such a bypass is possible while complying with the tolerance values along the first trajectory which are stored in the storage device (3).

6. Method according to one of the preceding claims,
**characterized in that**
a first trajectory (4) and further trajectories (7, 8) are captured in a driver-specific manner, are compared with one another in a driver-specific manner, the first trajectory (4) and greater tolerance values along the first trajectory (4) which result from the further trajectories (7, 8) are stored in the vehicle storage device (3) in a driver-specific manner, and an automated journey to the predefined parking space (2) which is possibly carried out is effected in a driver-specific manner using the data which are captured and stored in a driver-specific manner.

7. Method according to one of the preceding claims, **characterized in that**
- characteristic data relating to the predefined parking space (2) are also transmitted to a computing device outside the vehicle and are made available to the vehicle (1) and/or to other vehicles by the computing device outside the vehicle; and/or
- as an alternative or in addition to driving a vehicle to a predefined parking space (2), the method is also configured to drive a vehicle (1) from a predefined parking space (2).

8. Control unit (9) for a vehicle (1), having a storage device (3) and a control device (10) which can be connected to vehicle devices (11, 12, 13, 14, 15) which are suitable for recording trajectories (4, 7, 8) and for carrying out an automated journey to a predefined parking space (2) and/or an automated journey away from a predefined parking space (2), **characterized in that**
the control unit (9) is configured to carry out one of the methods according to one of Claims 1 to 7.

9. Vehicle (1), in particular motor vehicle, with vehicle devices (11, 12, 13, 14, 15) which are suitable for recording trajectories and for carrying out an automated journey to a predefined parking space (2) and/or an automated journey away from a predefined parking space (2),
**characterized in that**
the vehicle has a control unit (9) according to Claim 8 which is connected to the vehicle devices (11, 12, 13, 14, 15).

## Revendications

1. Procédé pour faire fonctionner un véhicule (1), notamment pour conduire le véhicule sur un emplacement de stationnement (2) prédéfini, une première trajectoire (4) pour une conduite automatisée du véhicule (1) sur l'emplacement de stationnement (2) prédéfini étant mémorisée dans un dispositif de mémorisation (3) côté véhicule, laquelle a été acquise pendant une conduite manuelle du véhicule (1) sur l'emplacement de stationnement (2) prédéfini, des valeurs de tolérance (5, 5') pour un écart par rapport à la première trajectoire (4) étant associées à la première trajectoire, desquelles le véhicule (1) est au maximum autorisé à s'écarter de la première trajectoire (4) lors d'une conduite automatisée sur l'emplacement de stationnement (2) prédéfini, et le véhicule (1) possédant une possibilité d'activation d'une conduite automatisée sur l'emplacement de stationnement (2) prédéfini lorsque le véhicule (2) se trouve dans une zone de la position de départ (6) de la première trajectoire,
lors d'au moins une conduite manuelle supplémentaire du véhicule (1) sur l'emplacement de stationnement (2) prédéfini, la trajectoire supplémentaire (7) parcourue à cette occasion étant acquise automatiquement, la première trajectoire (4) et la trajectoire supplémentaire (7) étant comparées entre elles et
**caractérisé en ce que** dans le cas où un écart en référence au chemin du véhicule (1) par la trajectoire supplémentaire (7) est constaté en référence à au moins un point pouvant être prédéfini de la première trajectoire (4), cet écart est associé au point pouvant être prédéfini de la première trajectoire (4) de telle sorte que l'écart constaté et la valeur de tolérance associée au point pouvant être prédéfini de la première trajectoire (4) sont additionnés et mémorisés dans le dispositif de mémorisation (3) côté véhicule en tant que nouvelle valeur de tolérance pour le point pouvant être prédéfini de la première trajectoire (4), et la première trajectoire (4) et les valeurs de tolérance le long de la première trajectoire (4), au choix conjointement avec des données caractéristiques du véhicule (1) qui a parcouru la première trajectoire (4) et les trajectoires supplémentaires (7, 8) pendant la conduite manuelle sur l'emplacement de stationnement (2) prédéfini, sont transmises à un dispositif de calcul externe au véhicule et sont mises à disposition du véhicule (1) et/ou d'autres véhicules par le dispositif de calcul externe au véhicule.

2. Procédé selon la revendication 1, **caractérisé en ce que** lors d'au moins une deuxième conduite manuelle supplémentaire du véhicule (1) sur l'emplacement de stationnement (2) prédéfini, la deuxième trajectoire supplémentaire (8) parcourue ici est automatiquement acquise, la première trajectoire (4) et la deuxième trajectoire supplémentaire (8) sont comparées entre elles et, dans le cas où un écart en référence au chemin du véhicule (2) par la deuxième trajectoire supplémentaire (8) est constaté en au moins un point pouvant être prédéfini de la première trajectoire (4), cet écart est associé au point pouvant être prédéfini de la première trajectoire (4) de telle sorte que l'écart constaté et la valeur de tolérance associée au point pouvant être prédéfini de la première trajectoire (4) sont additionnés et mémorisés dans le dispositif de mémorisation (3) côté véhicule en tant que nouvelle valeur de tolérance pour le point pouvant être prédéfini de la première trajectoire (4), sous réserve que la nouvelle valeur de tolérance est supérieure à la valeur de tolérance déjà mémorisée.

3. Procédé selon la revendication 1 ou 2, **caractérisé en ce que** des points pouvant être prédéfinis sont prédéfinis le long de la première trajectoire (4), lesquels présentent un écart fixe entre eux, de préférence un écart dans la plage de 5 cm à 30 cm, notamment de préférence un écart dans la plage de 10 cm à 20 cm.

4. Procédé selon l'une des revendications précédentes, **caractérisé en ce qu'**une conduite automatisée vers l'emplacement de stationnement (2) prédéfini se déroule toujours le long de la première trajectoire (4), sous réserve et tant qu'aucun obstacle n'est reconnu le long de la première trajectoire (4) par une surveillance de l'environnement au moyen d'un système de détection d'environnement du véhicule (1).

5. Procédé selon la revendication 4, **caractérisé en ce que** dans le cas de la reconnaissance d'un obstacle le long de la première trajectoire (4) pendant une conduite automatisée vers l'emplacement de stationnement (2) prédéfini, un contournement automatisé de l'obstacle est effectué sous réserve qu'un tel contournement soit possible en respectant le long de la première trajectoire les valeurs de tolérance mémorisées dans le dispositif de mémorisation (3).

6. Procédé selon l'une des revendications précédentes, **caractérisé en ce qu'**une première trajectoire (4) et des trajectoires supplémentaires (7, 8) sont acquises spécifiquement au conducteur, comparées entre elles spécifiquement au conducteur, la première trajectoire (4) et les valeurs de tolérance plus grandes le long de la première trajectoire (4) résultant des trajectoires supplémentaires (7, 8) sont mémorisées spécifiquement au conducteur dans le dispositif de mémorisation (3) côté véhicule et une conduite automatisée éventuellement exécutée sur l'emplacement de stationnement (2) prédéfini se déroule spécifiquement au conducteur en utilisant les données acquises et mémorisées spécifiquement au conducteur.

7. Procédé selon l'une des revendications précédentes, **caractérisé en ce que**
- des données caractéristiques de l'emplacement de stationnement (2) prédéfini sont également transmises à un dispositif de calcul externe au véhicule et sont mises à disposition du véhicule (1) et/ou d'autres véhicules par le dispositif de calcul externe au véhicule ;
et/ou
- en variante ou en complément à la conduite d'un véhicule sur un emplacement de stationnement (2) prédéfini, celui-ci est également conçu pour la conduite d'un véhicule (1) depuis un emplacement de stationnement (2) prédéfini.

8. Contrôleur (9) pour un véhicule (1), possédant un dispositif de mémorisation (3) et un dispositif de commande (10), qui peut être relié à des dispositifs côté véhicule (11, 12, 13, 14, 15), qui sont adaptés pour enregistrer des trajectoires (4, 7, 8) et pour exécuter une conduite automatisée sur un emplacement de stationnement (2) prédéfini et/ou un départ automatisé depuis un emplacement de stationnement (2) prédéfini,
**caractérisé en ce que**
le contrôleur (9) est conçu pour mettre en œuvre un des procédés selon l'une des revendications 1 à 7.

9. Véhicule (1), notamment véhicule automobile, comprenant des dispositifs côté véhicule (11, 12, 13, 14, 15) qui sont adaptés pour enregistrer des trajectoires et pour exécuter une conduite automatisée sur un emplacement de stationnement (2) prédéfini et/ou un départ automatisé depuis un emplacement de stationnement (2) prédéfini, **caractérisé en ce que**
il possède un contrôleur (9) selon la revendication 8, lequel est relié aux dispositifs côté véhicule (11, 12, 13, 14, 15).
